# EUROPÄISCHE PATENTSCHRIFT

(11) **EP 1 927 639 B1**
(45) Veröffentlichungstag und Bekanntmachung des Hinweises auf die Patenterteilung: **11.01.2012**
(21) Anmeldenummer: 07117864.4
(22) Anmeldetag: 04.10.2007
(51) Int. Cl.: C09J 7/04

(54) **Technisches Vliesklebeband**
Technical non-woven adhesive tape
Bande de collage technique de voile de carde

(30) Priorität: 01.12.2006 DE 202006018283 U
(43) Veröffentlichungstag der Anmeldung: 04.06.2008
(73) Patentinhaber: Coroplast Fritz Müller GmbH & Co. KG, 42279 Wuppertal (DE)
(72) Erfinder: Wittig, Gülay, 44799 Bochum (DE); Söhngen, Marcus, 42279 Wuppertal (DE); Frigge, Christoph, 45549 Sprockhövel (DE); Lodde, Christoph, 44229 Dortmund (DE)
(74) Vertreter: Patentanwälte Dr. Solf & Zapf

(56) Entgegenhaltungen:
- EP-A- 0 530 100
- EP-A- 1 081 202
- EP-A- 1 116 764
- WO-A-93/24692

## Beschreibung

Die vorliegende Erfindung betrifft ein technisches, insbesondere auf sich selbst wickelbares, textiles Klebeband mit einem Träger, der aus einem verfestigten, aus Fasern gebildeten Vlies besteht, und mit einer auf einer Seite des Trägers aufgebrachten, insbesondere druckempfindlichen, Klebstoffbeschichtung.

Kabelsätze werden, insbesondere im Automobilbereich, gewöhnlich mit Klebebändern umwickelt. Neben der reinen Bündelungsfunktion haben dabei vor allem textile Klebebänder mittlerweile zahlreiche Zusatzfunktionen, wie den Schutz der Leitungen vor Abrieb oder die Dämpfung von Klapper- oder Vibrationsgeräuschen, übernommen.

Weit verbreitet sind Gewebeklebebänder aus Zellwolle oder Polyester, Veloursbänder aus Polyester und Polyamid und verschiedene, meist ebenfalls auf Polyester basierende Klebebänder, bei denen der Träger aus einem Vlies besteht. Die Vliese bestehen dabei aus Fasern, die entweder aerodynamisch oder durch Kardierung zu einem Flor gelegt werden. In der Karde werden die Fasern durch Verzug parallelisiert.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind. Als anwendungstechnisch wichtige Prüfungen sind in dieser Richtlinie beispielsweise Prüfmethoden für die Kompatibilität von Klebebändern mit elektrischen Fahrzeugleitungen sowie für die Chemikalienbeständigkeit, das Geräuschdämpfungsverhalten, das Fogging-Verhalten und das Flagging-Verhalten beschrieben.

Hinsichtlich des Geräuschdämpfungsverhaltens sieht die LV 312 eine Einteilung in fünf Klassen vor, die in der nachstehenden Tabelle 1 wiedergegeben ist.

**Tabelle 1: Einteilung der geräuschdämpfenden Eigenschaften in Klassen nach LV 312**

| Geräuschdämpfungsklasse | Anforderung |
|---|---|
| A - keine Geräuschdämpfung | 0 bis < 2 dB (A) |
| B - geringe Geräuschdämpfung | > 2 bis 5 dB (A) |
| C - mittlere Geräuschdämpfung | > 5 bis 10 dB (A) |
| D - hohe Geräuschdämpfung | > 10 bis 15 dB (A) |
| E - sehr hohe Geräuschdämpfung | > 15 dB (A) |

Eine weitere wichtige Eigenschaft technischer Klebebänder, insbesondere solcher, bei denen der Träger aus einem Faservlies besteht, ist mit der Frage verbunden, inwieweit der Träger gegen Faserausrisse und -delamination beständig ist. Dies kann beispielsweise dadurch getestet werden, indem das zu prüfende Trägermaterial mit einem Klebeband beklebt wird und eine vorgeschriebenen Zeit, z. B. 24 Stunden, bei einer bestimmten Temperatur, z. B. bei 60°C, unter Gewichtsbelastung, z. B. unter einer Gewichtsbelastung von 3 kg, gelagert und dann das Klebeband wieder abgezogen wird. Danach ist bereits optisch erkennbar, ob es zu Faserausrissen bzw. einer Trägerdelamination gekommen ist. Werden bekannte Bänder der eingangs beschriebenen Art den genannten Testbedingungen unterworfen, so zeigen sie Faserausrisse bzw. es kommt zu einer Delamination des Trägermaterials.

Klebebänder mit Vliesträger zeichnen sich durch ein gutes Preis-Leistungsverhältnis aus und sind insbesondere als Nähvliesbänder ebenso vorteilhaft zu verarbeiten wie Zellwoll-Gewebebänder.

Damit Vliesklebebänder auf sich selbst gewickelt werden können, ohne dass es beim Abwickeln zu Faserausrissen kommt, muss der Vliesträger verfestigt werden. Dafür sind unterschiedliche Verfahren bekannt.

Neben der für Klebebänder weit verbreiteten, in EP-B-0 668 335 beschriebenen Verfestigungsart des Übernähens, die jedoch relativ aufwändig ist, werden in der Literatur auch Bänder auf der Basis von Vliesen mit anderen Verfestigungsarten beschrieben. So beschreibt die EP-B-1 123 958 die Verwendung eines Klebebandes als Wickelband zur Bündelung von Kabein in Automobilen, wobei das Klebeband einen bandförmigen Vliesträger mit einer ein- oder beidseitig aufgebrachten Kleberbeschichtung aufweist und wobei der Vliesträger durch Luft- und/oder Wasserstrahlen verfestigt ist. Derartige Klebebänder sind verglelchsweise steif und weisen daher bei üblicher Verarbeitung ein "Flagging" auf. Versucht man bei dieser Art von Klebebändern durch eine höhere Klebkraft dem Flagging entgegen zu wirken, so kommt es zu Faserausrissen bzw. zur Delamination beim Abwickeln eines auf sich selbst gewickelten Klebebandes, das einseitig beschichtet worden ist.

Die EP-B-1 081 202 beschreibt ein Klebeband, das einen Vliesträger und eine Klebstoffschicht umfasst, die eine Seite des Trägers bedeckt. Die Vliesfasern sind durch Nadeln verfestigt. Das Band ist in direktem Kontakt zwischen dem Klebstoff und dem Träger einer benachbarten Wickellage zusammengerollt. Der Träger weist eine Dicke von 0,3 bis 1 mm und eine Oberflächenmasse der Fasern von 70 bis 120 g/m² auf, und die Fasern sind im Klebstoff auf einem Teil der Dicke des Trägers von 10 µm bis 0,5 mm eingetaucht. Auch dadurch kommt eine weitere Verfestigung zustande. Derartige Klebebänder sind nicht handeinreißbar und ebenfalls zu steif, so dass es hier in der Praxis zu einem Flagging kommt. Die EP-B-1 114 883 beschreibt ein mechanisch verfestigtes Vliesklebeband mit einer Harzimprägnierung. Ein solches Klebeband ist aufgrund seiner starken Verfestigung nur eingeschränkt geräuschdämpfend. Ähnliche Verhältnisse liegen vor, wenn in einem Klebebandvlies thermoplastische Fasern durch Anschmelzen verbunden sind, wie dies aus der EP-A-1 116 764 bekannt ist.

Außerdem tritt bei den bekannten Bändern am Kabelsatz oftmals das bereits erwähnte Flagging, d. h. eine endseitige Auffaserung auf, so dass die Enden jeweils beim Einsatz fixiert werden müssen. So ergeben sich nachtelligerweise erhöhte Verarbeitungszeiten.

Der vorliegenden Erfindung liegt die Aufgabe zugrunde, ein technisches in der Herstellung wenig aufwändiges, insbesondere auf sich selbst wickelbares Klebeband der eingangs genannten Art zu schaffen, das die genannten Nachteile des bekannten Standes der Technik überwindet. Über diese Grundaufgabe hinausgehend soll dabei ein erfindungsgemäßes Klebeband bei einer - zumindest in Querrichtung gegebenen - guten Handeinreißbarkeit eine Geräuschdämpfung mindestens der Klasse B aufweisen. Insbesondere soll dabei das erfindungsgemäße Klebeband auch weitere Anforderungen der vorstehend genannten Prüfrichtlinie LV 312 erfüllen, eine hohe Schmiegsamkeit aufweisen und sowohl manuell als auch maschinell verarbeitbar sein.

Diese Aufgabe wird mit einem Klebeband gemäß dem Anspruch 1 gelöst, bei dem das Vlies des Trägers ein kreuzverlegtes Nadelvlies ist.

Durch die sich erfindungsgemäß bei der Herstellung des Trägervlieses an die eingangs erwähnte Kardierung oder an die aerodynamische Florlegung anschließende Kreuzlegung wird der Flor übereinander geschichtet. Verfahren zur Herstellung von solchen kreuzverlegten Vliesen sind dabei an sich bekannt und beispielsweise in der WO-A-93 24 692 und in der EP-A-0 530 100 beschrieben.

Bei der Kreuzlegung besteht ein Vorteil darin, dass durch das Legen keine ausschließliche Längs- oder Querorientierung der in der Karde parallelisierten Fasern erfolgt, sondern eine Orientierung, die sowohl in Längs- als auch in Querrichtung erfolgt, wobei der Orientierungswinkel der Fasern unterschiedlich einstellbar ist. Bei dem erfindungsgemäßen Trägervlies überwiegt in der Regel die Orientierung der Fasern in Querrichtung. Da querorientierte Faservliese in Querrichtung eine höhere Zugfestigkeit als in Längsrichtung haben, ist das erfindungsgemäße Klebeband vergleichsweise besser quereinreißbar als Klebebänder mit Trägermaterialien, die auf dem Einsatz z. B. längsgelegter Vliese basieren.

Ein weiterer Vorteil des erfindungsgemäßen Klebebandes besteht auch darin, dass sich durch die Kreuzlegung verschiedene - auch geringe - Trägerstärken leicht herstellen lassen.

Die sich an die Florlegung anschließende Verfestigung erfolgt erfindungsgemäß durch eine Vernadelung, die bekanntermaßen auf einem Nadelstuhl vorgenommen wird. In dem Nadelstuhl wird das vorzugsweise auf einer Krempelanlage hergestellte und erfindungsgemäß kreuzverlegte Faservlies mechanisch verdichtet. Hierbei durchstechen viele tausend, auf einem Nadelbrett befindliche Nadeln, die seitlich mit kleinen Widerhaken versehen sind, das Faservlies nach unten, wobei die Fasern mitgeführt und durch Auf- und Abbewegungen der Nadeln - ähnlich wie bei einem Walkprozess - verkreuzt und verfestigt werden, wobei die einzelnen Florlagen mit ausreichender Verbundfestigkeit aneinander gebunden werden. Der Grad der Verdichtung wird beim Vernadeln durch die Stichzahl pro Flächeneinheit und Einstichtiefe der Nadeln in das Faservlies bestimmt.

Neben der mechanischen Verfestigung durch das Vernadeln kann die Verfestigung der einzelnen Fasern untereinander zusätzlich auch thermisch - kohäsiv oder adhäsiv - erfolgen.

Die Fasern des Trägers können - jeweils zumindest teilweise, also auch als ein Mischwerkstoff - aus Polypropylen, Polyethylen, einem Polyester, wie PET, oder Viskose bestehen. Im Hinblick auf eine zusätzliche thermische Bindung der Fasern aneinander ist dabei wegen eines verringerten Energieeinsatzes der verfahrenstechnisch vorteilhaft vergleichsweise niedrige Erweichungspunkt des Polyethylens hervorzuheben.

Des Weiteren ist es in vorteilhafter Weise auch möglich, das vernadelte Träger-Zwischenprodukt in einen Imprägniertrog zu tauchen und mit Bindemitteln auf Syntheselatex- oder Acrylatbasis zu imprägnieren. Abschließend wird dann ein so getränktes Vlies getrocknet, wobei dem Bindemittel das Wasser entzogen wird. So entsteht eine ausreichende Verfestigung der Faserbindepunkte. Ein Nachteil einer Vollbadimprägnierung besteht dabei darin, dass die Klebebandträger relativ rauh und hart werden können, wobei aber durch Art und Dosierung des Bindemittels zu steuern ist, wie weich oder hart der Griff des Klebebandträgers ausfallen soll. Eine relative weiche, textile Oberfläche wird durch eine nur einseitige Imprägnierung erreicht, die beispielsweise durch ein Aufrakeln des Bindemittels erfolgen kann.

Es hat sich gezeigt, dass bei einem erfindungsgemäßen Trägeraufbau ein Kabelwickelband mit zumindest mittlerer oder hoher Geräuschdämpfung herstellbar ist. Das erfindungsgemäße Klebeband zeichnet sich dabei durch einen verringerten Fertigungsaufwand und durch eine geringere Steifigkeit aus als die eingangs erwähnten bekannten Klebebänder. Somit hat das erfindungsgemäße Klebeband eine geringere Neigung zum Flagging, als die oben beschriebenen Klebebänder, wie dies insbesondere aus der nachfolgenden Tabelle 2 hervorgeht, die eine Gegenüberstellung des Flaggingverhaltens eines erfindungsgemäßen Klebebandes im Vergleich zu den vorstehend beschriebenen bekannten Klebebändern wiedergibt.

**Tabelle 2: Flaggingverhalten von Klebebändern im Vergleich**

| | Band gemäß EP 0668336 | Band gemäß EP 1081202 | Band gemäß EP 1123958 | erfindungsgemäßes Band |
|---|---|---|---|---|
| Dicke EN1942 | 0,3 mm | 0,6 mm | 0,4 mm | 0,3 mm |
| Flagging LV 312 nach 24h | 0 mm | > 30 mm | 10 - 30 mm | 0 mm |
| handreißbar | sehr gut | schlecht | mäßig | gut |
| Faserausriß beim Abrollen | nein | leicht | stark | nein |

Das erfindungsgemäße Klebeband kann ohne Verwendung eines Interliners auf sich selbst zu einer Rolle und davon wieder herunter gewickelt werden, ohne dass es dabei zu einem Herausziehen der Fasern käme.

In Tabelle 3 sind Basisdaten eines erfindungsgemäßen Kabelwickelbandes mit ihren möglichen bzw. - in Klammern angegeben - jeweilig bevorzugten Variationsbereichen aufgeführt. Die Ermittlung der angegebenen technischen Parameter erfolgt dabei nach den jeweils üblichen Normen: EN IS0 2286-1 für das spezifische Gewicht des Trägers 1, DIN EN 1942 für die Dicke D, DIN EN 14410 für die mechanischen Werte, DIN EN 1939 für die Klebkraft und DIN EN 1944 für die Abrollkraft des Klebebandes.

Das Flaggingverhalten ist nach LV 312 zu bestimmen, wobei für das Flagging eines erfindungsgemäßen Kabelwickelbandes in jedem Fall Werte erzielt werden, die - bestimmt nach LV 312 - kleiner sind als 5 mm.

**Tabelle 3: Technische Daten eines erfindungsgemäßen Klebebandes**

| Eigenschaft | Einheit | Größe |
|---|---|---|
| Banddicke D | mm | 0,20 - 0,30 (0,27 - 0,30) |
| Mechanische Werte | | |
| Reißdehnung | % | 20 - 50 (40 - 45) |
| Bruch kraft | N/cm | 20 - 50 (26 - 30) |
| Klebkraft | | |
| auf Stahl | N/cm | 2-8(4-5) |
| auf Bandrücken | N/cm | 2-10(5-6) |
| Abrollkraft | N/19 mm | 3-6 |
| Flagging | mm | 0 |
| 30 min und 24 h | | |
| Abrieb | | |
| mit 5-mm-Dorn | Hübe | 80 - 89 (Klasse A) |
| mit 10-mm-Dorn | Hübe | 143 -270 (Klasse B) |
| Geräuschdämpfung | dB (A) | ca. 8 |

Weitere vorteilhafte Ausführungen der Erfindung sind in den Unteransprüchen und der nachfolgenden speziellen Beschreibung enthalten. Anhand eines Ausführungsbeispiels wird unter Bezugnahme auf die Zeichnung die Erfindung näher erläutert. Dabei zeigen:
- Fig. 1: einen Querschnitt durch ein erfindungsgemäßes Klebeband,
- Fig. 2: eine perspektivische Darstellung zur Veranschaulichung des erfindungsgemäß für das Trägervlies vorgesehenen Kreuzlegens,
- Fig. 3: eine schematisierte Schnittdarstellung zur Veranschaulichung des erfindungsgemäß für das Trägervlies vorgesehenen Nadelns,
- Fig.4: eine stark vergrößerte Schnittdarstellung zur Veranschaulichung des beim erfindungsgemäß für das Trägervlies vorgesehenen Nadelns ablaufenden Vorgänge.

In den verschiedenen Figuren der Zeichnung sind gleiche Teile stets auch mit den gleichen Bezugszeichen versehen, so dass sie in der Regel auch jeweils nur einmal beschrieben werden.

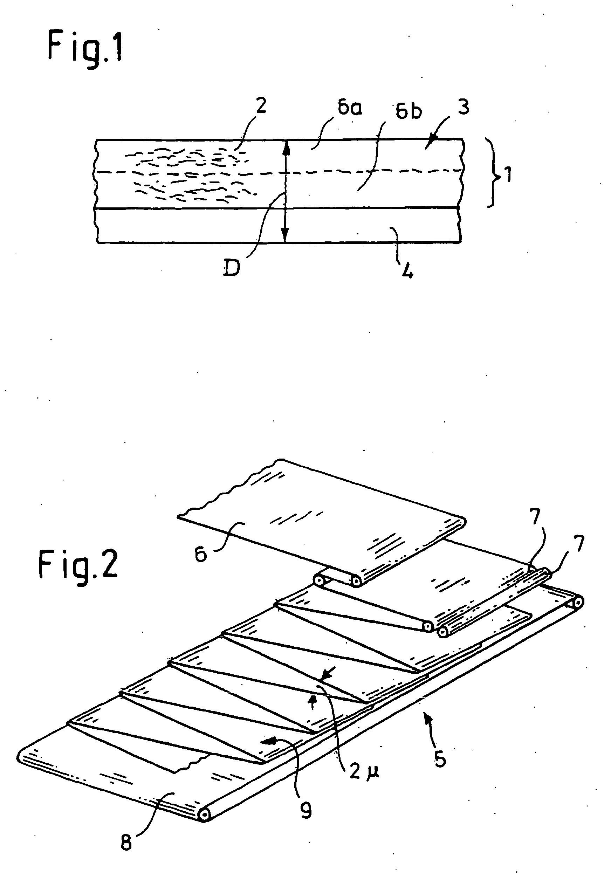

Wie zunächst aus Fig. 1 hervorgeht, weist ein erfindungsgemäßes technisches, insbesondere ein auf sich selbst wickelbares, textiles Klebeband einen Träger 1 auf, der aus einem verfestigten, aus Fasern 2 gebildeten Vlies 3 besteht. Auf einer Seite des Trägers 1 ist eine, insbesondere druckempfindliche Klebebeschichtung 4 aufgebracht.

Was die Klebebeschichtung 4 betrifft, so können als druckempfindliche Haftklebstoffe vorzugsweise Acrylatklebstoffe, insbesondere UV-vernetzte Acrylatklebstoffe, aber auch Synthese- und auch Naturkautschukklebstoffe eingesetzt werden. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenen Leitungen aus.

Um bei einem bevorzugten Flächengewicht des erfindungsgemäßen Klebebandes von höchstens 65 g/m², vorzugsweise von 30 bis 60 g/m², die bei der spiralförmigen Bewicklung von Kabelsätzen erforderlichen in Tabelle 3 angegebenen Haftwerte auf Bandrücken von 5 bis 6 N/cm zu erreichen, wird vorteilhafterweise mit Auftragsgewichten von 20 bis 120 g/m², vorzugsweise von 30 bis 100 g/m², gearbeitet.

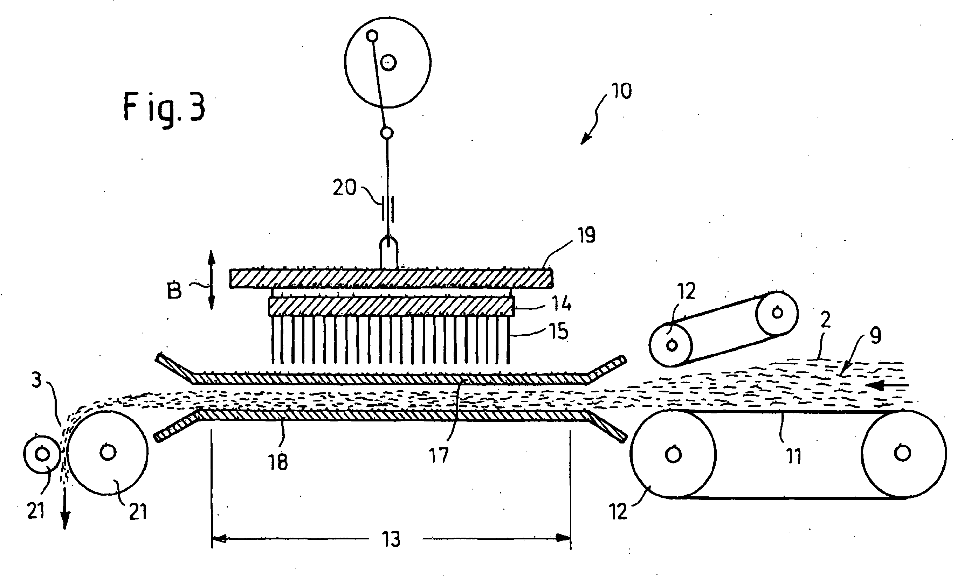

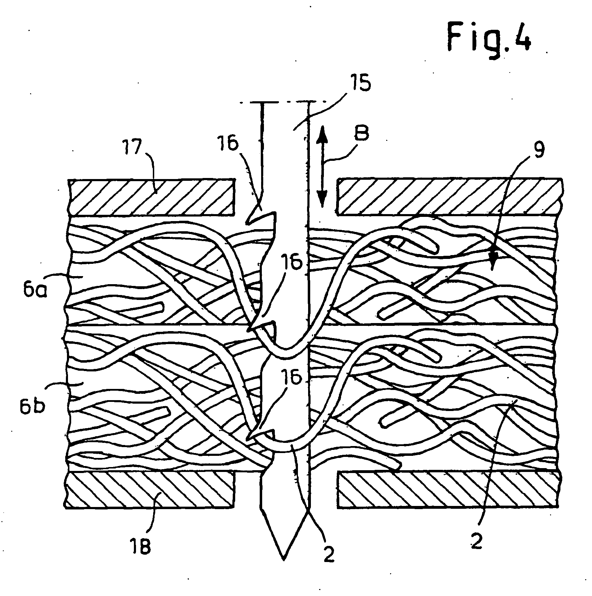

Bei dem Vlies 3 des Trägers 1 handelt es sich erfindungsgemäß um ein kreuzverlegtes Nadelvlies, dessen Aufbau und Herstellungsprozess durch Fig. 2 bis 4 verdeutlicht wird. Fig. 2 veranschaulicht dabei das Verfahren des Kreuzlegens und Fig. 3 und 4 veranschaulichen das Verfahren des Nadelns.

In dem in Fig. 2 dargestellten Kreuzleger 5 wird eine Faserflorbahn 6 über einen Legewagen zugeführt, dem die mit dem Bezugszeichen 7 bezeichneten Förderwalzen zugeordnet sind. Die Anförderung der Faserflorbahn 6 erfolgt dabei zunächst horizontal und rechtwinklig zu einem Abzugsband 8 für die kreuzgelegte Bahn 9. Von dem Legewagen, der eine entsprechend der vorgesehenen Legebreite der kreuzgelegten Bahn 9 hin- und hergehende Bewegung ausführt, gelangt die Faserflorbahn 6 dann über die Förderwalzen 7 in vertikaler Richtung auf das Abzugsband 8.

Die Faserflorbahn 6 wird dabei mit einer vorgegebenen Legegeschwindigkeit abgelegt, während das Abzugsband 8 mit einer vorgegebenen Abzugsgeschwindigkeit quer zu der zugeführten Faserflorbahn 6 bewegt wird. Aufgrund des Geschwindigkeitsverhältnisses wird die Faserflorbahn 6 zick-zack-förmig auf der Abzugsbahn 8 abgelegt. Dabei können je nach dem sich einstellenden, von dem Geschwindigkeitsverhältnis der Bahnen 6, 8 bestimmten Legewinkel p zwei oder auch mehr Lagen der Faserflorbahn 6 in der kreuzgelegten Bahn 9 übereinander zu liegen kommen. Der Legewinkel p, für den in Fig. 2 der doppelte Wert 2µ gekennzeichnet ist, bestimmt dabei den Orientierungswinkel der Fasern in der kreuzgelegten Bahn 9, die dann im fertigen Träger 1 des erfindungsgemäßen Klebebandes den in Fig. 1 mit dem Bezugszeichen 2 bezeichneten Fasern entsprechen.

Nach dem Legen erfolgt die Vernadelung. Insbesondere geschieht dies auf einem schematisch in Fig. 3 dargestellten Nadelstuhl 10, der das gefaltete, über einen Zuführtisch 11 mittels Einzugswalzen 12 vorgelegte Faservlies 9 mechanisch verdichtet und durch die Vernadelung verfestigt. Hierbei durchstechen in einer Nadelzone 13 auf einem Nadelbrett 14 befindliche Nadeln 15, die seitlich mit kleinen Widerhaken (Bezugszeichen 16 in Fig. 4) versehen sind, das Faservlies 9 nach unten, wobei die Fasern 2 mitgeführt und durch Auf- und Abbewegungen (Doppelpfeil B) der Nadeln 15 - ähnlich wie bei einem Walkprozess - verkreuzt und verfestigt werden. Die FaservliesBahn 9 bewegt sich dabei in der Nadelzone 13 zwischen einer oberen Lochplatte 17 und einer unteren Lochplatte 18, die auch in Fig. 4 zu sehen sind. Die Nadeln 15 sind dabei über das Nadelbrett 14 an einem Nadelbalken 19 befestigt, der von einem Hauptantrieb 20 angetrieben wird. Aus dem genadelten Vliesstoff, der durch Abzugswalzen 21 aus dem Nadelstuhl 10 ausgebracht wird, wird dann der Träger 1 des erfindungsgemäßen Klebebandes gefertigt. Daher ist der genadelte Vliesstoff in Fig. 3 - wie das Vlies in Fig. 1 - mit dem Bezugszeichen 3 bezeichnet.

Wie bereits erwähnt, kommen in der kreuzgelegten Bahn 9 zwei oder auch mehr Lagen der Faserflorbahn 6 übereinander zu liegen. Dies ist in Fig. 4, aber auch in Fig. 1 dargestellt, wobei die Lagen der Faserflorbahn 9 mit den Bezugszeichen 6a und 6b bezeichnet sind.

Wie in Fig. 4 an einem mittleren Widerhaken 16 der Nadel 15 dargestellt ist, werden beim Vernadeln Fasern 2 aus der einen Lage 6a in die andere Lage 6b mitgenommen und wirken auf diese Weise verfestigend, wodurch eine spätere Delamination des Trägers 1 verhindert wird.

Zu demselben Zweck - und auch um Faserausrisse zu unterbinden - kann des Weiteren vorgesehen sein, dass der Träger 1 zusätzlich thermisch verfestigt bzw. thermofixiert wird, wobei die Oberfläche des Trägers 1 vorzugsweise eine Struktur aufweist, wie sie infolge einer Kalandrierung mit einer Prägewalze entsteht.

Im Speziellen wurde als Ausführungsbeispiel für die Erfindung ein Kabelwickelband hergestellt, dessen Träger 1 den in Tabelle 4 wiedergegebenen Vliesaufbau aufwies.

**Tabelle 4: Vlieskonstruktion**

| Parameter | Einheit | Größe |
|---|---|---|
| Trägermaterial | | kreuzverlegtes Nadelvlies |
| Faserart | | PET |
| Flächengewicht | g/m² | 60 |
| Faserlänge | mm | 60 |
| Faserstärke | dtex | 1,7 und 4 |
| Art der Faserverfestigung | | vernadelt und thermofixiert |

Das Klebeband mit dem erfindungsgemäß hergestellten Träger 1 wies dabei Basisdaten im Bereich der in Tabelle 3 dargestellten Wertebereiche auf.

Die Fasern 2 des Trägers 1 können - über die Angaben in der vorstehenden Tabelle hinausgehend - mit Vorteil eine Faserlänge von 20 bis 100 mm, vorzugsweise von 40 bis 60 mm, aufweisen. Die Faserstärke kann im Bereich von 1 bis 10 dtex, vorzugsweise von 1,7 bis 6 dtex, liegen.

Im Hinblick auf die eingangs dargestellte Delaminationsproblematik wurde das Trägermaterial 1 - wie ebenfalls eingangs beschrieben - mit einem Klebeband beklebt und 24 Stunden bei einer Temperatur von 60 °C unter einer Gewichtsbelastung von 3 kg gelagert und dann das Klebeband wieder abgezogen. Im Gegensatz zu einem als Vergleichsbeispiel verwendeten Klebeband mit einem Träger, dessen Vlies längsverlegt war, kam es nicht zu Faserausrissen bzw. einer Trägerdelamination.

Die Beispielausführung zeigt, dass ein erfindungsgemäßes Klebeband eine zur Bewicklung von Kabelsätzen ausreichende Verbundfestigkeit, Zugfestigkeit und Haftung auf dem Bandrücken aufweist. Durch seinen speziellen Aufbau verbindet sich dabei bei dem erfindungsgemäßen Klebeband die positive Eigenschaft einer insbesondere in Querrichtung leichten Handeinreißbarkeit mit einem geringen Herstellungsaufwand und mit einer erhöhten Geräuschdämpfung.

Die Erfindung ist nicht auf die dargestellten Ausführungsbeispiele beschränkt, sondern umfasst auch alle im Sinne der Erfindung gleichwirkenden Ausführungen. So können neben sogenannten einschichtigen Trägern 1, die im gesamten Aufbau homogen sind, d. h. aus einem einheitlichen Fasermaterial bestehen, bedarfsweise auch zwei- oder mehrschichtige Träger 1 hergestellt werden, bei denen die einzelnen Schichten aus hinsichtlich ihrer Beanspruchbarkeit, Dämpfung, Materialaufbau der Fasern 2 usw. unterschiedlichen Materialien bestehen. Für die Herstellung zweischichtiger Träger wird das Produkt dabei nach dem Durchlaufen einer ersten Nadelzone 13 gewendet und in einer zweiten Nadelzone mit der zweiten Schicht, beispielsweise einer speziell gestalteten Trägeroberschicht, vernadelt.

Des Weiteren kann auch vorgesehen sein, dass der Vliesträger 1 des erfindungsgemäßen Klebebandes Fasern 2 mit unterschiedlichen Faserstärken enthält, wodurch eine leichtere Einreißbarkeit begünstigt wird.

Auch einem Kabelbaum, umfassend mehrere, jeweils mit einer Isolierung versehene, insbesondere elektrische, Leitungen und ein Klebeband, mit dem diese Leitungen umwickelt sind und das die erfindungsgemäßen Merkmale aufweist, wird erfinderische Bedeutung beigemessen. Allerdings beschränkt sich die Verwendung erfindungsgemäßer Klebebänder nicht auf die Bewicklung von Kabelsätzen. Vielmehr sind sie aufgrund der beschriebenen optimalen Eigenschaftskombination auch für weitere Einsatzzwecke geeignet.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Träger
- 2: Fasern von 1
- 3: Vlies von 1
- 4: Klebstoffbeschichtung
- 5: Kreuzleger
- 6: Faserflorbahn
- 6a, 6b: Lagen von 6
- 7: Förderwalzen von 5
- 8: Abzugsband von 5
- 9: kreuzverlegte Faserflorbahn
- 10: Nadelstuhl
- 11: Zuführtisch von 10
- 12: Einzugswalzen von 10
- 13: Nadelzone von 10
- 14: Nadelbrett von 10
- 15: Nadeln auf 14
- 16: Widerhaken von 15
- 17: obere Lochplatte von 10
- 18: untere Lochplatte von 10
- 19: Nadelbalken von 10
- 20: Hauptantrieb von 10
- 21: Abzugswalzen von 10

- B: Bewegungsrichtung von 15
- D: Dicke (von 1 und 4)

- µ: Legewinkel von 6

## Patentansprüche

1. Technisches, insbesondere auf sich selbst wickelbares, textiles Klebeband mit einem Träger (1), der aus einem verfestigten, aus Fasern (2) gebildeten Vlies (3) besteht, und mit einer auf einer Seite des Trägers (1) aufgebrachten, insbesendere druckempfindlichen. Klebebeschichtung (4),
**dadurch gekennzeichnet, dass** das Vlies (3) des Trägers 1 ein kreuzverlegtes Nadelvlies ist, in dem zwei oder mehr Lagen einer Faserflorbahn (6) in einem derartigen Legewinkel (µ) übereinander liegen, dass der Verbund aus dem bandförmigen Träger (1) und der Klebebeschichtung (4) quer zur Längsrichtung des Trägers (1) handeinreißbar ist, wobei eine Geräuschdämofung von mindestens der Klasse B nach LV 312 vorhanden ist.

2. Klebeband nach Anspruch 1,
**gekennzeichnet durch** ein Flächengewicht von höchstens 65 g/m², vorzugsweise von 30 bis 60 g/m².

3. Klebeband nach Anspruch 1 oder 2,
**gekennzeichnet durch** eine Banddicke (D) im Bereich von 0,20 bis 0,30 mm.

4. Klebeband nach einem der Ansprüche 1 bis 3;
**gekennzeichnet durch** eine Bruchkraft im Bereich von 20 bis 50 N/cm.

5. Klebeband nach einem der Ansprüche 1 bis 4,
**gekennzeichnet durch** eine Reißdehnung im Bereich von 20 bis 50 Prozent.

6. Klebeband nach einem der Ansprüche 1 bis 5,
**gekennzeichnet durch** eine Klebkraft auf Stahl im Bereich von 2 bis 8 N/cm bei einer Prüfung nach EN 1939.

7. Klebeband nach einem der Ansprüche 1 bis 6,
**gekennzeichnet durch** eine Klebkraft auf dem Bandrücken im Bereich von 2 bis 10 N/cm bei einer Prüfung nach EN 1939.

8. Klebeband nach einem der Ansprüche 1 bis 7,
**gekennzeichnet durch**
eine Geräuschdämpfung von mehr als 5 dB (A) nach LV312.

9. Klebeband nach einem der Ansprüche 1 bis 8,
**dadurch gekennzeichnet, dass** die Fasem (2) des Trägers (1) zumindest teilweise aus Polypropylen, Polyethylen, einem Polyester, wie PET, oder Viskose bestehen.

10. Klebeband nach einem der Ansprüche 1 bis 9,
**dadurch gekennzeichnet, dass** die Klebebeschichtung (4) aus einem Acrylatklebstoff, insbesondere aus einem UV-vemetrten Acrylatklebstoff, oder aus einem Synthesekautschuk-Klebstoff besteht.

11. Klebeband nach einem der Ansprüche 1 bis 10,
**dadurch gekennzeichnet , dass** die Klebebeschichtung (4) mit einem Flächengewicht von 20 bis 120 g/m². vorzugsweise von 30 bis 100 g/m², auf den Träger (1) aufgetragen ist.

12. Klebeband nach einem der Ansprüche 1 bis 11,
**dadurch gekennzeichnet, dass** der Träger (1) zusätzlich thermisch verfestigt wird, wobei die Oberfläche des Trägers (1) vorzugsweise eine Struktur aufweist, wie sie infolge einer Kalandrierung mit einer Prägewalze entsteht.

13. Klebeband nach einem der Ansprüche 1 bis 12,
**gekennzeichnet durch** ein Flagging < 5 mm nach LV 312.

14. Klebeband nach einem der Ansprüche 1 bis 13.
**dadurch gekennzeichnet, dass** die Fasem (2) des Trägers (1) eine Faserlänge im Bereich von 20 bis 100 mm, vorzugsweise von 40 bis 60 mm, aufweisen.

15. Klebeband nach einem der Ansprüche 1 bis 14,
**dadurch gekennzeichnet, dass** die Fasern (2) des Trägers(1) eine Faserstärke im Bereich von 1 bis 10 dtex, vorzugsweise von 1,7 bis 6 dtex, aufweisen.

16. Klebeband nach einem der Ansprüche 1 bis 15,
**dadurch gekennzeichnet, dass** der Träger (1) Fasem (2) mitunterschiedfichen Faserstärken aufweist.

17. Klebeband nach einem der Ansprache 1 bis 16,
**dadurch gekennzeichnet, dass** der Träger (1) thermofixiert ist.

18. Kabelbaum, umfassend mehrere, jeweils mit einer Isolierung versehene, insbesondere elektrische, Leitungen und ein Klebeband, mit dem diese Leitungen und/oder ggf. nicht isolierte Stellen der Leitungen, umwickelt sind, **dadurch gekennzeichnet, dass** das Klebeband die Merkmale eines der Ansprüche 1 bis 17 aufweist.

## Claims

1. Technical textile adhesive tape, in particular of the type which can be wound up onto itself, with a substrate (1) which consists of a reinforced non-woven fabric (3) formed by fibres (2) and with an adhesive coating (4) which is in particular pressure-sensitive and is applied on one side of the substrate (1), **characterized in that** the non-woven fabric (3) of the substrate (1) is a cross-laid needle-punched non-woven fabric in which two or more layers of a fibre pile web (6) lie on top of each other in a laying angle (µ) such that the composite formed of the strip-like substrate (1) and the adhesive coating (4) can be manually torn transversely with respect to the longitudinal direction of the substrate (1), at least Class B soundproofing in accordance with LV 312 being provided.

2. Adhesive tape according to Claim 1, **characterized by** a grammage of at the most 65 g/m² and preferably of between 30 and 60 g/m².

3. Adhesive tape according to Claim 1 or 2, **characterized by** a tape thickness (D) in the range of 0.20 to 0.30 mm.

4. Adhesive tape according to one of Claims 1 to 3, **characterized by** a breaking strength in the range of 20 to 50 N/cm.

5. Adhesive tape according to one of Claims 1 to 4, **characterized by** an elongation at break in the range of 20 to 50 percent.

6. Adhesive tape according to one of Claims 1 to 5, **characterized by** an adhesive power on steel in the range of 2 to 8 N/cm during a test in accordance with EN 1939.

7. Adhesive tape according to one of Claims 1 to 6, **characterized by** an adhesive power on the rear of the tape in the range of 2 to 10 N/cm during a test in accordance with EN 1939.

8. Adhesive tape according to one of Claims 1 to 7, **characterized by** a soundproofing level of more than 5 dB(A) in accordance with LV312.

9. Adhesive tape according to one of Claims 1 to 8, **characterized in that** the fibres (2) of the substrate (1) consist at least partially of polypropylene, polyethylene, a polyester, such as PET, or viscose.

10. Adhesive tape according to one of Claims 1 to 9, **characterized in that** the adhesive coating (4) consists of an acrylate adhesive, in particular a UV-crosslinked acrylate adhesive or a synthetic rubber adhesive.

11. Adhesive tape according to one of Claims 1 to 10, **characterized in that** the adhesive coating (4) is applied onto the substrate (1) with a grammage of 20 to 120 g/m² and preferably 30 to 100 g/m².

12. Adhesive tape according to one of Claims 1 to 11, **characterized in that** the substrate (1) is additionally thermally reinforced, the surface of the substrate (1) preferably having a structure such as that produced by calendering with an embossing roller.

13. Adhesive tape according to one of Claims 1 to 12, **characterized by** flagging < 5 mm in accordance with LV 312.

14. Adhesive tape according to one of Claims 1 to 13, **characterized in that** the fibres (2) of the substrate (1) have a fibre length in the range of 20 to 100 mm and preferably 40 to 60 mm

15. Adhesive tape according to one of Claims 1 to 14, **characterized in that** the fibres (2) of the substrate (1) have a fibre strength in the range of 1 to 10 dtex and preferably 1.7 to 6 dtex.

16. Adhesive tape according to one of Claims 1 to 15, **characterized in that** the substrate (1) has fibres (2) with varying fibre strengths.

17. Adhesive tape according to one of Claims 1 to 16, **characterized in that** the substrate (1) is subjected to heat-setting.

18. Cable set comprising several leads, in particular of the electrical type, each provided with insulation, and an adhesive tape wrapped around these leads and/or where applicable non-insulated sections of the leads, **characterized in that** the adhesive tape has the features of one of Claims 1 to 17.

## Revendications

1. Ruban adhésif textile technique, en particulier enroulable sur lui-même, comportant un substrat (1) qui est réalisé dans un non-tissé (3) consolidé, formé par des fibres, et comportant un revêtement adhésif (4), en particulier sensible à la pression, appliqué sur une face du substrat (1),
**caractérisé en ce que** le non-tissé (3) du substrat (1) est un non-tissé aiguilleté posé en croix, dans lequel deux ou plusieurs couches d'une bande de voile de carde (6) sont superposées selon un angle de pose (µ) tel que l'ensemble, formé par le substrat (1) en bande et le revêtement adhésif (4), est déchirable à la main de façon transversale par rapport à la direction longitudinale du substrat (1), un amortissement du bruit au moins de la classe B selon la norme LV 312 étant réalisé.

2. Ruban adhésif selon la revendication 1, **caractérisé par** une masse par unité de surface de 65 g/m² maximum, de préférence de 30 à 60 g/m².

3. Ruban adhésif selon la revendication 1 ou 2, **caractérisé par** une épaisseur (D) comprise dans une plage de 0,20 à 0,30 mm.

4. Ruban adhésif selon l'une quelconque des revendications 1 à 3, **caractérisé par** une force de rupture de 20 à 50 N/cm.

5. Ruban adhésif selon l'une quelconque des revendications 1 à 4, **caractérisé par** un allongement à la rupture de 20 à 50 pour cent.

6. Ruban adhésif selon l'une quelconque des revendications 1 à 5, **caractérisé par** une force adhésive sur l'acier comprise dans une plage de 2 à 8 N/cm lors d'un test selon la norme EN 1939.

7. Ruban adhésif selon l'une quelconque des revendications 1 à 6, **caractérisé par** une force adhésive sur la face arrière du ruban comprise dans une plage de 2 à 10 N/cm lors d'un test selon la norme EN 1939.

8. Ruban adhésif selon l'une quelconque des revendications 1 à 7, **caractérisé par** un amortissement du bruit de plus de 5 dB (A) selon la norme LV 312.

9. Ruban adhésif selon l'une quelconque des revendications 1 à 8, **caractérisé en ce que** les fibres (2) du substrat (1) sont réalisées au moins en partie en polypropylène, en polyéthylène, dans un polyester, tel que le PET, ou en viscose.

10. Ruban adhésif selon l'une quelconque des revendications 1 à 9, **caractérisé en ce que** le revêtement adhésif (4) est réalisé à partir d'une colle à base d'acrylate, en particulier à partir d'une colle à base d'acrylate réticulée aux UV, ou dans une colle à base de caoutchouc synthétique.

11. Ruban adhésif selon l'une quelconque des revendications 1 à 10, **caractérisé en ce que** le revêtement adhésif (4) est déposé avec une masse par unité de surface de 20 à 120 g/m², de préférence de 30 à 100 g/m², sur le substrat (1).

12. Ruban adhésif selon l'une quelconque des revendications 1 à 11, **caractérisé en ce que** le substrat (1) est, en plus, consolidé thermiquement, la surface du substrat (1) comportant de préférence une structure telle que celle obtenue à la suite d'un calandrage avec un cylindre d'estampage.

13. Ruban adhésif selon l'une quelconque des revendications 1 à 12, **caractérisé par** une diminution (flagging) < 5 mm selon la norme LV 312.

14. Ruban adhésif selon l'une quelconque des revendications 1 à 13, **caractérisé en ce que** les fibres (2) du substrat (1) ont une longueur comprise dans une plage de 20 à 100 mm, de préférence de 40 à 60 mm.

15. Ruban adhésif selon l'une quelconque des revendications 1 à 14, **caractérisé en ce que** les fibres (2) du substrat (1) ont une grosseur comprise dans une plage de 1 à 10 dtex, de préférence de 1,7 à 6 dtex.

16. Ruban adhésif selon l'une quelconque des revendications 1 à 15, **caractérisé en ce que** le substrat (1) comporte des fibres (2) avec des grosseurs différentes.

17. Ruban adhésif selon l'une quelconque des revendications 1 à 16, **caractérisé en ce que** le substrat (1) est thermofixé.

18. Faisceau de câbles, comprenant plusieurs câbles, munis chacun d'une isolation, en particulier des câbles électriques, et un ruban adhésif, qui est enroulé autour desdits câbles et/ou, le cas échéant, autour des zones non isolées des câbles, **caractérisé en ce que** le ruban adhésif comporte les caractéristiques de l'une quelconque des revendications 1 à 17.
